# EUROPEAN PATENT APPLICATION

(11) **EP 3 984 733 A1**
(43) Date of publication of application: **20.04.2022**
(21) Application number: 21200335.4
(22) Date of filing: 30.09.2021
(51) Int. Cl.: B30B 1/26, B30B 15/14, B30B 15/24

(54) **DRIVE DEVICE FOR A PRESSING MACHINE**

(30) Priority: 09.10.2020 JP 2020171461
(71) Applicant: Aida Engineering Ltd., Sagamihara-shi Kanagawa 252-5181 (JP)
(72) Inventor: KOSHIMIZU, Takashi, Kanagawa, 252-5181 (JP); IWAMOTO, Kazuhiko, Kanagawa, 252-5181 (JP); IMAI, Kenji, Kanagawa, 252-5181 (JP)
(74) Representative: Grosse, Felix Christopher

(57) **Abstract**

Provided is a drive device (100) for an electric servo press machine, the drive device (100) including: left and right drive shafts (103A and 103B) rotationally driven by left and right electric servo motors; main pinion gears (104A, 104B, 108A, and 108B) provided to the left and right drive shafts (103A and 103B); main gears (107A, 107B, 111A, and 112B) meshed with the main pinion gears (104A, 104B, 108A, and 108B); connecting rods (113A, 113B, 114A, and 114B) connected to the main gears (107A, 107B, 111A, and 112B); and a slide (117) supported thereby. Further, idle gears (120A, 120B, 121A, and 121B) can be provided between the main gears.

## Description

### BACKGROUND OF THE INVENTION

### 1. Field of the Invention

The present invention relates to a drive device (mechanism) for a pressing machine (press machine).

### 2. Description of the Related Art

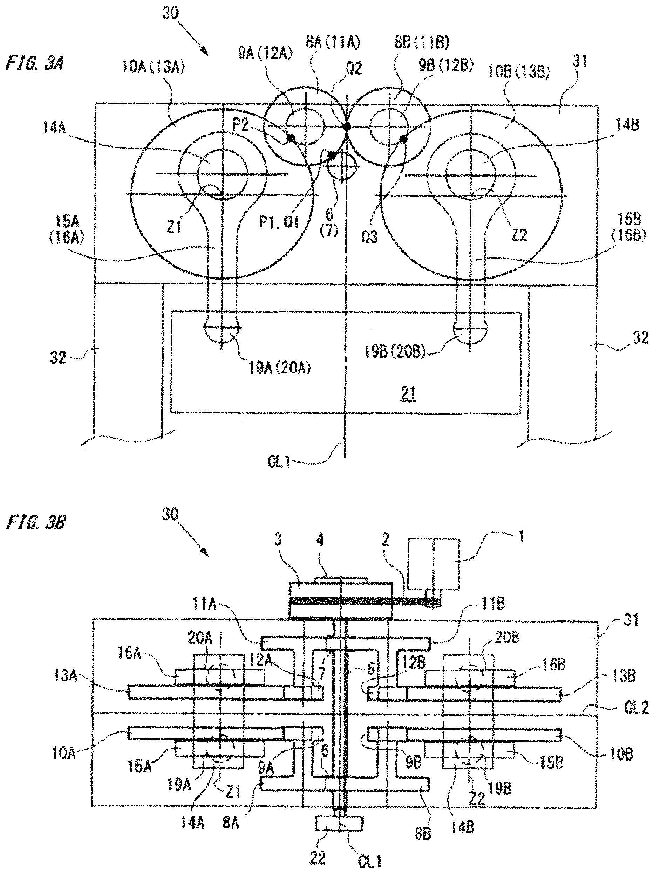

Hitherto, as a drive device (mechanism) for a pressing machine, a drive device as illustrated in, for example, Fig. 3A and Fig. 3B has been known.

A drive device (mechanism) 30 for a pressing machine is a so-called mechanical-type press machine. As illustrated in Fig. 3A and Fig. 3B, the drive device (mechanism) 30 is configured to transmit a rotation output of a main motor 1 being a drive source to a flywheel 3 via a V-belt 2 so that the drive device 30 is rotationally driven. The drive device 30 further includes a frame 31 (crown of the pressing machine) extending in a left-and-right direction, and frames 32 (columns for the pressing machine) extending in a gravity direction.

A drive shaft 5 is rotationally connected to the flywheel 3 through intermediation of a clutch mechanism 4, and the rotational connection between the flywheel 3 and the drive shaft 5 can be switched between a connection state and a disconnection state by the clutch mechanism 4. A brake device 22 for stopping rotation of the drive shaft 5 is arranged on a side of the drive shaft 5 opposite to the flywheel 3.

The drive shaft 5, to which rotational power of the flywheel 3 is transmitted, extends from a base end side being the clutch mechanism 4 side to a distal end side on the opposite side. On the distal end side, a front drive gear 6 is provided coaxially and substantially integrally with the drive shaft 5. On the base end side, a rear drive gear 7 is provided coaxially and substantially integrally with the drive shaft 5. The drive shaft 5 is supported so as to be rotatable with respect to the crown 31 and the columns 32.

A left-front intermediate gear 8A is meshed with and rotationally connected (or rotationally coupled) to an outer peripheral gear of the front drive gear 6. Further, a right-front intermediate gear 8B is meshed with and rotationally connected to the left-front intermediate gear 8A. The gears described herein are outer peripheral gears, and are supported so as to be rotatable with respect to the crown 31 and the columns 32.

A left-front main pinion gear 9A is provided coaxially and substantially integrally with the left-front intermediate gear 8A. Similarly, a right-front main pinion gear 9B is provided coaxially and substantially integrally with the right-front intermediate gear 8B.

A left-front main gear 10A is meshed with the left-front main pinion gear 9A, and a right-front main gear 10B is meshed with the right-front main pinion gear 9B.

Crankpins 14A and 14B offset (made eccentric) from rotation axes Z1 and Z2 of the left-front main gear 10A and the right-front main gear 10B are provided substantially integrally with the left-front main gear 10A and the right-front main gear 10B, respectively. Base end sides of a left-front connecting rod 15A and a right-front connecting rod 15B are supported so as to be rotatable with respect to the crankpins 14A and 14B, respectively.

A slide 21 is supported through intermediation of support portions 19A and 19B on distal end sides of the left-front connecting rod 15A and the right-front connecting rod 15B. The slide 21 is supported so as to be vertically movable with respect to the crown 31 and the columns 32.

Similarly, an outer peripheral gear of a left-rear intermediate gear 11A is meshed with and rotationally connected to a rear drive gear 7. Further, a right-rear intermediate gear 11B is meshed with and rotationally connected to the outer peripheral gear of the left-rear intermediate gear 11A.

A left-rear main pinion gear 12A is provided coaxially and substantially integrally with the left-rear intermediate gear 11A. Similarly, a right-rear main pinion gear 12B is provided coaxially and substantially integrally with the right-rear intermediate gear 11B.

Crankpins 14A and 14B offset (made eccentric) from rotation axes Z1 and Z2 of a left-rear main gear 13A and a right-rear main gear 13B are provided substantially integrally with the left-rear main gear 13A and the right-rear main gear 13B, respectively. Base end sides of a left-rear connecting rod 16A and a right-rear connecting rod 16B are supported so as to be rotatable with respect to the crankpins 14A and 14B, respectively.

The slide 21 is supported through intermediation of support portions 20A and 20B on distal end sides of the left-rear connecting rod 16A and the right-rear connecting rod 16B.

In such a configuration, when the main motor 1 is rotationally driven, a rotational drive force thereof is transmitted to the main gears 10A, 10B, 13A, and 13B via the V-belt 2, the flywheel 3, the clutch mechanism 4, the drive shaft 5, and the gears. The rotation force is converted into a vertical motion of the slide 21 via the crankpins 14A and 14B so that press working is performed by a die placed on a lower surface of the slide 21.

Incidentally, in recent years, an electric servo press machine that can achieve a free motion of the slide has been employed. In the case of the electric servo press machine, in view of the advantage of being capable of controlling various operation states such as a slide motion, a pressing pressure (pressurizing force), and an electromagnetic braking force by software with a relatively high degree of freedom and in view of promoting reduction in device cost and reduction in size, in general, the following configuration is employed. Specifically, a flywheel and a clutch/brake device included in the related-art mechanical-type press are completely eliminated, and a servo motor and a crank mechanism are always in a rotationally coupled state so that the rotational coupling between a drive source (servo motor) and an operation portion (slide) cannot be physically (or mechanically) canceled.

That is, the flywheel 3 and the clutch mechanism 4 of Fig. 3A and Fig. 3B are omitted, and the drive shaft 5 is rotationally driven directly by an electric servo motor. In this case, in a drive path on the left side of Fig. 3A, there are given a point P1 and a point P2. At the point P1, the front drive gear 6 (or the rear drive gear 7) integral with the drive shaft 5 and the left-front intermediate gear 8A (or the left-rear intermediate gear 11A) are meshed with each other. At the point P2, the left-front main pinion gear 9A (or the left-rear main pinion gear 12A) and the left-front main gear 10A (or the left-rear main gear 13A) are meshed with each other. That is, two meshing points in total are provided.

Meanwhile, in a drive path on the right side of Fig. 3A, there are given a point Q1 (=P1), a point Q2, and a point Q3. At the point Q1, the front drive gear 6 (or the rear drive gear 7) integral with the drive shaft 5 and the left-front intermediate gear 8A (or the left-rear intermediate gear 11A) are meshed with each other. At the point Q2, the left-front intermediate gear 8A (or the left-rear intermediate gear 11A) and the right-front intermediate gear 8B (or the right-rear intermediate gear 11B) are meshed with each other. At the point Q3, the right-front main pinion gear 9B (or the right-rear main pinion gear 12B) and the right-front main gear 10B (or the right-rear main gear 13B) are meshed with each other. That is, three meshing points in total are provided.

Each of those meshing points is a point at which the gears are meshed with each other, and hence is a point that causes free movement of each gear in a rotation direction due to an influence of backlash of the gear. When the number of points differs between the left and right, phases are shifted from each other between the left and light. As a result, when the servo motor is to perform finer control, the control may be affected.

### SUMMARY OF THE INVENTION

Thus, according to the present invention, there is provided a drive device for an electric servo press machine including at least a pair of left and right electric servo motors as drive sources, the drive device including:
a left drive shaft rotationally driven directly by an electric servo motor on a left side of the pair of left and right electric servo motors;
a right drive shaft rotationally driven directly by an electric servo motor on a right side of the pair of left and right electric servo motors;
a left-front drive gear and a left-rear drive gear, which have the same specifications, and are provided coaxially and integrally with the left drive shaft;
a right-front drive gear and a right-rear drive gear, which have the same specifications, and are provided coaxially and integrally with the right drive shaft;
a left-front intermediate gear and a left-rear intermediate gear, which have the same specifications, and are meshed with the left-front drive gear and the left-rear drive gear, respectively;
a right-front intermediate gear and a right-rear intermediate gear, which have the same specifications, and are meshed with the right-front drive gear and the right-rear drive gear, respectively;
a left-front main pinion gear and a left-rear main pinion gear, which have the same specifications, and are provided coaxially and integrally with the left-front intermediate gear and the left-rear intermediate gear, respectively;
a right-front main pinion gear and a right-rear main pinion gear, which have the same specifications, and are provided coaxially and integrally with the right-front intermediate gear and the right-rear intermediate gear, respectively;
a left-front main gear and a left-rear main gear, which have the same specifications, are meshed with the left-front main pinion gear and the left-rear main pinion gear, respectively, and are provided coaxially with each other;
a right-front main gear and a right-rear main gear, which have the same specifications, are meshed with the right-front main pinion gear and the right-rear main pinion gear, respectively, and are provided coaxially with each other;
a left crankpin provided integrally with the left-front main gear and the left-rear main gear at a position offset in a predetermined manner from a common rotation center axis of the left-front main gear and the left-rear main gear;
a right crankpin provided integrally with the right-front main gear and the right-rear main gear at a position offset in a predetermined manner from a common rotation center axis of the right-front main gear and the right-rear main gear;
a left-front connecting rod and a left-rear connecting rod having base end sides supported so as to be rotatable with respect to the left crankpin;
a right-front connecting rod and a right-rear connecting rod having base end sides supported so as to be rotatable with respect to the right crankpin; and
a slide supported on respective distal end sides of the left-front connecting rod, the left-rear connecting rod, the right-front connecting rod, and the right-rear connecting rod so as to be vertically movable.

Further, according to the present invention, there is provided a drive device for an electric servo press machine including at least a pair of left and right electric servo motors as drive sources, the drive device including:
a left drive shaft rotationally driven through intermediation of gears by an electric servo motor on a left side of the pair of left and right electric servo motors;
a right drive shaft rotationally driven through intermediation of gears by an electric servo motor on a right side of the pair of left and right electric servo motors;
a left-front main pinion gear and a left-rear main pinion gear, which have the same specifications, and are provided coaxially and integrally with the left drive shaft;
a right-front main pinion gear and a right-rear main pinion gear, which have the same specifications, and are provided coaxially and integrally with the right drive shaft;
a left-front main gear and a left-rear main gear, which have the same specifications, are meshed with the left-front main pinion gear and the left-rear main pinion gear, respectively, and are provided coaxially with each other;
a right-front main gear and a right-rear main gear, which have the same specifications, are meshed with the right-front main pinion gear and the right-rear main pinion gear, respectively, and are provided coaxially with each other;
a left crankpin provided integrally with the left-front main gear and the left-rear main gear at a position offset in a predetermined manner from a common rotation center axis of the left-front main gear and the left-rear main gear;
a right crankpin provided integrally with the right-front main gear and the right-rear main gear at a position offset in a predetermined manner from a common rotation center axis of the right-front main gear and the right-rear main gear;
a left-front connecting rod and a left-rear connecting rod having base end sides supported so as to be rotatable with respect to the left crankpin;
a right-front connecting rod and a right-rear connecting rod having base end sides supported so as to be rotatable with respect to the right crankpin; and
a slide supported on respective distal end sides of the left-front connecting rod, the left-rear connecting rod, the right-front connecting rod, and the right-rear connecting rod so as to be vertically movable.

In the present invention, the drive device for an electric servo press machine further includes: a left-front idle gear meshed with the left-front main gear; and a right-front idle gear meshed with the left-front idle gear and meshed with the right-front main gear.

In the present invention, in the drive device for an electric servo press machine, press capacity generating point positions different from each other in a left-and-right direction of the slide supported on a side on which the left-front connecting rod and the left-rear connecting rod are provided and a side on which the right-front connecting rod and the right-rear connecting rod are provided, and the drive device is configured to control drive of each of the electric servo motors so as to distribute transmission torque at the different press capacity generating point positions in the left-and-right direction within capacities of the electric servo motors.

In the present invention, the drive device for an electric servo press machine further includes a friction-type brake device, which is configured to act on an output rotation shaft of the each of the electric servo motors to apply a brake, and is caused to function as a parking brake and an emergency stop brake, and
when the friction-type brake device is caused to function as the emergency stop brake, the controller is configured to control the friction-type brake device such that a friction element actually starts to come into contact with a mating member to start braking at an estimated stop time at which the each of the electric servo motors is stopped in rotation in a normal case or around the estimated stop time through execution of rotation stop control.

### BRIEF DESCRIPTION OF THE DRAWINGS

Fig. 1A is a front view of a drive device (mechanism) for an electric servo press machine according to a first example of an embodiment of the present invention, in which portions related to the present invention are extracted.
Fig. 1B is a top view of portions related to the drive device (mechanism) of Fig. 1A.
Fig. 2A is a front view of a drive device (mechanism) for an electric servo press machine according to a second example of the embodiment of the present invention, in which portions related to the present invention are extracted.
Fig. 2B is a top view of portions related to the drive device (mechanism) of Fig. 2A.
Fig. 3A is a front view of a related-art drive device (mechanism) for a mechanical-type press machine.
Fig. 3B is a top view of portions related to the drive device (mechanism) of Fig. 3A.

### DESCRIPTION OF THE EMBODIMENTS

Now, with reference to the accompanying drawings, description is made of an embodiment for illustrating an example of a drive device (mechanism) for an electric servo press machine according to the present invention. The present invention is not limited to the embodiment described below.

One object of the present invention is to provide a drive device for an electric servo press machine, which is capable of suppressing a phase difference in the drive device, achieving fine press control, and therefore, producing a high-quality press product, in the electric servo press machine including electric servo motors.

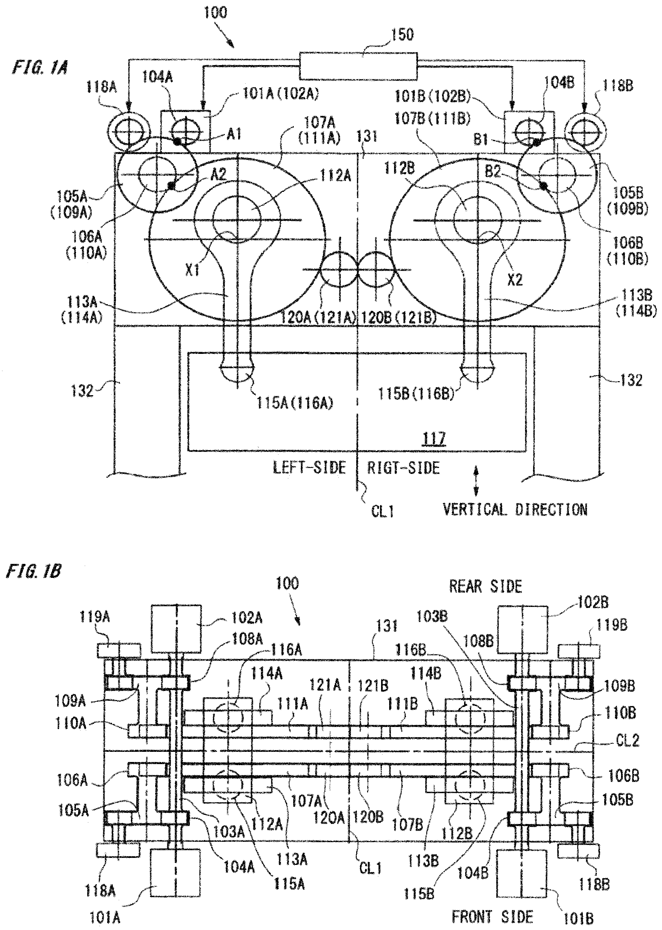

Fig. 1A is a front view of a drive device (mechanism) 100 for an electric servo press machine according to a first example of this embodiment, in which portions related to the present invention are extracted and other portions are omitted. Fig. 1B is a top view of portions related to the drive device (mechanism) of Fig. 1A

Here, the left indicates a left side of a center line CL1 illustrated in Fig. 1A and Fig. 1B, and the right indicates a right side of the same center line CL1. Further, the front indicates a lower side of a center line CL2, which is illustrated in Fig. 1B, and the rear indicates an upper side of the same center line CL2 in Fig. 1B.

As illustrated in Fig. 1A and Fig. 1B, servo motors 101A and 102A being drive sources are coupled to one end (front side) and another end (rear side) of a common left drive shaft 103A, respectively, so that the servo motors 101A and 102A are rotationally driven. Similarly, on the right side, servo motors 101B and 102B being drive sources are coupled to one end (front side) and another end (rear side) of a common right drive shaft 103B, respectively, so that the servo motors 101B and 102B are rotationally driven. A gear can be interposed between the servo motor 101A (102A) and the left drive shaft 103A. Similarly, a gear can be interposed between the servo motor 101B (102B) and the right drive shaft 103B.

The drive of the servo motors 101A, 101B, 102A, and 102B is controlled based on a drive control signal from a control unit 150 being a controller.

The drive device 100 includes a frame 131 (crown of the press machine) extending in a left-and-right direction, and frames 132 (columns of the press machine) extending in a gravity direction, and each servo motor in the first example is mounted to the crown 131 in a fixed manner including components described later. Further, each drive shaft in the first example is supported so as to be rotatable with respect to the crown 131 and the column 132 through intermediation of a bearing or the like including components described later.

On a front side of the left drive shaft 103A, a left-front drive gear 104A is provided coaxially and substantially integrally with the left drive shaft 103A. On a rear side of the left drive shaft 103A, a left-rear drive gear 108A is provided coaxially and substantially integrally with the left drive shaft 103A. As each gear in the first example including gears described later, an outer peripheral gear is given as an example, and each gear is supported so as to be rotatable with respect to the crown 131 and the column 132 through intermediation of a bearing or the like.

Incidentally, the drive device 100 for an electric servo press machine according to this example basically has a structure with left-and-right symmetry and front-and-rear symmetry (front-and-back symmetry) except for a part which is asymmetric. Thus, components such as the gears and the shafts located at symmetrical positions can have at least the same specifications except for the asymmetric part.

A left-front intermediate gear 105A is meshed with and rotationally connected (rotationally coupled) to the left-front drive gear 104A. Similarly, a left-rear intermediate gear 109A is meshed with and rotationally connected (rotationally coupled) to the left-rear drive gear 108A.

A left-front main pinion gear 106A is provided coaxially and substantially integrally with the left-front intermediate gear 105A. Similarly, a left-rear main pinion gear 110A is provided coaxially and substantially integrally with the left-rear intermediate gear 109A.

A left-front main gear 107A is meshed with the left-front main pinion gear 106A. Similarly, a left-rear main gear 111A is meshed with the left-rear main pinion gear 110A.

A crankpin 112A offset (made eccentric) from a common rotation axis X1 is provided substantially integrally with the left-front main gear 107A and the left-rear main gear 111A, and base end sides of a left-front connecting rod 113A and a left-rear connecting rod 114A are supported so as to be rotatable with respect to the crankpin 112A.

A front side and a rear side on a left side of a slide 117 are supported through intermediation of support portions 115A and 116A on distal end sides of the left-front connecting rod 113A and the left-rear connecting rod 114A.

Similarly, a right-front intermediate gear 105B is meshed with and rotationally connected (rotationally coupled) to the right-front drive gear 104B. Further, a right-rear intermediate gear 109B is meshed with and rotationally connected (rotationally coupled) to the right-rear drive gear 108B.

A right-front main pinion gear 106B is provided coaxially and substantially integrally with the right-front intermediate gear 105B. Similarly, a right-rear main pinion gear 110B is provided coaxially and substantially integrally with the right-rear intermediate gear 109B.

A right-front main gear 107B is meshed with the right-front main pinion gear 106B. Similarly, a right-rear main gear 111B is meshed with the right-rear main pinion gear 110B.

A crankpin 112B offset (made eccentric) from a common rotation axis X2 is provided substantially integrally with the right-front main gear 107B and the right-rear main gear 111B, and base end sides of a right connecting rod 113B and a right-rear connecting rod 114B are supported so as to be rotatable with respect to the crankpin 112B.

A front side and a rear side on a right side of the slide 117 are supported through intermediation of support portions 115B and 116B on distal end sides of the right-front connecting rod 113B and the right-rear connecting rod 114B.

The slide 117 is supported so as to be vertically movable with respect to the crown 131 and the columns 132.

In such a configuration, when the servo motors 101A and 102A (101B and 102B) are rotationally driven based on a drive signal from the control unit 150, a rotation force is transmitted to the left-front drive gear 104A and the left-rear drive gear 108A (right-front drive gear 104B and right-rear drive gear 108B) integral with the left drive shaft 103A (right drive shaft 103B), the left-front intermediate gear 105A and the left-rear intermediate gear 109A (right-front intermediate gear 105B and right-rear intermediate gear 109B), the left-front main pinion gear 106A and the left-rear main pinion gear 110A (right-front main pinion gear 106B and right-rear main pinion gear 110B), and the left-front main gear 107A and the left-rear main gear 111A (right-front main gear 107B and right-rear main gear 111B) in the stated order, and the rotation force is converted into a vertical motion of the slide 117 via a crank mechanism (rotation-reciprocating linear motion conversion mechanism) including the left-front connecting rod 113A and the left-rear connecting rod 114A (right-front connecting rod 113B and right-rear connecting rod 114B) so that press working is performed by a die placed on a lower surface of the slide 117.

According to such a configuration in the first example, the number of meshing points of the gears in a drive path (drive device) on the left-front side from the left drive shaft 103A to the left-front main gear 107A is two in total of A1 and A2. Similarly, in a drive path (drive device) on the left-rear side from the left drive shaft 103A to the left-rear main gear 111A, the number of meshing points is two in total.

Further, the number of meshing points of the gears in a drive path (drive device) on the right-front side from the right drive shaft 103B to the right-front main gear 107B is two in total of B1 and B2. Similarly, in a drive path (drive device) on the right-rear side from the right drive shaft 103B to the right-rear main gear 111B, the number of meshing points is two in total.

Thus, according to such a configuration in the first example, the control unit 150 performs synchronization (tuning) control so as to eliminate rotation phase differences of the electric servo motors, thereby being capable of suppressing the phase differences in rotation of all the main gears 107A, 111A, 107B, and 111B on the right side, the left side, the front side, and the rear side of the drive device, and therefore, suppressing the phase differences of all motions (vertical motions) of the left-front connecting rod 113A, the left-rear connecting rod 114A, the right-front connecting rod 113B, and the right-rear connecting rod 114B.

Further, in the first example, the left drive shaft 103A and the right drive shaft 103B are independent, and are configured to be driven by the electric servo motors 101A and 102A and the electric servo motors 101B and 102B, respectively. Thus, on the left and right sides of the slide 117, that is, the "side on which the left-front connecting rod 113A and the left-rear connecting rod 114A are provided" and the "side on which the right-front connecting rod 113B and the right-rear connecting rod 114B are provided", press capacities at capacity generating point positions (near a bottom dead center) can be made different.

That is, the press capacities in the left-and-right direction of the slide 117 can be made different. Thus, when a component asymmetrical in the left-and-right direction is to be pressed, or when a component including a plurality of dies provided in the left-and-right direction, which differ in required press capacity (components in which an eccentric load is generated at the time of pressing), is to be pressed, appropriate press capacities can be applied in the left-and-right direction, thereby being capable of producing a high-quality press-molded product.

Further, in this embodiment, as illustrated in Fig. 1A and Fig. 1B, two (a pair of) idle gears 120A and 120B (or 121A and 121B) can be interposed between the left-front main gear 107A (left-rear main gear 111A) and the right-front main gear 107B (right-rear main gear 111B).

The idle gears 120A and 121A are meshed with the left-front main gear 107A and the left-rear main gear 111A, respectively, and are meshed with the idle gears 120B and 121B, respectively.

The idle gears 120B and 121B are meshed with the right-front main gear 107B and the right-rear main gear 111B, respectively.

The idle gear 120A corresponds to a left-front idle gear in the present invention, the idle gear 121A corresponds to a left-rear idle gear in the present invention, the idle gear 120B corresponds to a right-front idle gear in the present invention, and the idle gear 121B corresponds to a right-rear idle gear in the present invention.

As described above, with the configuration in which the idle gear 120A (121A) and the idle gear 120B (121B) are interposed between the left-front main gear 107A (or the left-rear main gear 111A) and the right-front main gear 107B (or the right-rear main gear 111B), motions of the "left-front main gear 107A (or the left-rear main gear 111A)" and the "right-front main gear 107B (or the right-rear main gear 111B)" can be mechanically (structurally) synchronized (tuned) with each other. Therefore, motions of the "side on which the left-front connecting rod 113A and the left-rear connecting rod 114A are provided" and the "side on which the right-front connecting rod 113B and the right-rear connecting rod 114B are provided" can be mechanically (structurally) synchronized (tuned) with each other.

Thus, it is possible to contribute to reduction in cost and simplification of synchronization (tuning) control by software by the control unit 150.

Further, with this configuration in which the idle gear 120A (or 121A) and the idle gear 120B (or 121B) are interposed between left and right main gears, that is, the left-front main gear 107A (or the left-rear main gear 111A) and the right-front main gear 107B (or the right-rear main gear 111B), torque can be transmitted between the left and right main gears via those idle gears.

Hitherto, torque is transmitted from a main pinion gear to a main gear with one meshing point (torque transmission path) between the main pinion gear and the main gear. However, according to this configuration, torque can be transmitted to the main gear with two meshing points (torque transmission paths), that is, the "meshing point between the main pinion gear and the main gear" and the "meshing point between the idle gear and the main gear".

Thus, when required torque about the rotation axis of the main gear is equal to that of a configuration example in which an idle gear is not interposed, in this configuration, the transmission torque to the main gear can be dispersed to the two meshing points (torque transmission paths), thereby being capable of suppressing a load (transmission torque) acting on each meshing point (torque transmission path) to be low. Thus, according to this configuration, the strength of each gear can be made low, thereby being capable of contributing to reduction in size and weight of the drive device for a press machine.

Conversely, when the strengths of the gears are set equal to each other, according to this configuration, the transmission torque to the main gear can be dispersed to the two meshing points (torque transmission paths), thereby being capable of increasing the total transmission torque to the main gear. Accordingly, according to this configuration, it is possible to contribute to increase in the press capacity of the electric servo press machine.

Further, in this configuration, required torque can be compensated for between the left and right main gears, that is, the left-front main gear 107A (or the left-rear main gear 111A) and the right-front main gear 107B (or the right-rear main gear 111B). Thus, in the left and right main gears (or the con rods), and therefore, in the left-and-right direction of the slide, different capacity generating point positions (near a bottom dead center) are provided, and the transmission torque at the different capacity generating point positions (near the bottom dead center) can be distributed to the left and right within allowable torque (electric servo motor capacity) of the press machine as a whole.

Thus, when a component asymmetrical in the left-and-right direction is to be pressed, or a component including a plurality of dies provided in the left-and-right direction, which differ in required press capacity (component in which an eccentric load is generated at the time of pressing), is to be pressed, an appropriate press capacity can be distributed and applied in the left-and-right direction within the allowable torque (electric servo motor capacity) of the press machine as a whole, thereby being capable of producing a high-quality press-molded product.

As described above, according to the first example of this embodiment, it is possible to provide the drive device for an electric servo press machine, which is capable of suppressing the phase difference in the drive device, achieving fine press control, and therefore, producing a high-quality press product, in the electric servo press machine including the electric servo motors.

In the first example, brake devices 118A, 118B, 119A, and 119B meshed with the left-front intermediate gear 105A, the right-front intermediate gear 105B, the left-rear intermediate gear 109A, and the right-rear intermediate gear 109B, respectively, are arranged, thereby being capable of braking the main gears 107A, 107B, 111A, and 111B so as to stop rotation thereof. Those brake devices 118A, 118B, 119A, and 119B are configured to be capable of controlling drive (braking operation) thereof based on a control signal from the control unit 150.

In order to cope with abnormality in a control system of the electric servo motors 101A, 101B, 102A, and 102B, friction-type (mechanical-type) friction brakes are employed as the brake devices 118A, 118B, 119A, and 119B, and the brake devices 118A, 118B, 119A, and 119B can be caused to function as parking brakes for preventing unintentional rotation during rotation stop. Further, when the electric servo motors 101A, 101B, 102A, and 102B are to be suddenly stopped at the time of emergency or runaway in terms of safety, the brake devices 118A, 118B, 119A, and 119B can also be caused to function as emergency stop brakes.

In such a case, in view of achieving both avoidance of danger and suppressing friction of a friction element, the control unit 150 can perform such control that the friction element actually starts to come into contact with a mating member to start braking at an estimated stop time at which the electric servo motor is stopped in rotation in a normal case or around that time through execution of rotation stop control (for example, electromagnetic brake control).

That is, when a sudden stop command is issued, the control unit 150 performs control of switching the control of the electric servo motors 101A, 101B, 102A, and 102B to a predetermined motion (for example, a motion of stopping the electric servo motors 101A, 101B, 102A, and 102B at maximum acceleration within a range in which vibration and noise do not increase), and actively performing the rotation stop control for the motors to suppress a time to press stop to the minimum in a normal time. Further, when the minimum set time has elapsed regardless of whether the motor rotation is normal or abnormal or without making the decision, the control unit 150 performs control of canceling the rotation stop control to be switched to a motor rotation free state, and causing the brake devices 118A, 118B, 119A, and 119B to actually perform a brake operation (to actually perform braking) in this state.

According to such a configuration, the press machine can be suddenly stopped safely and reliably in a short period of time in response to a sudden stop command while avoiding a severe friction-type (mechanical-type) brake operation, and, even when runaway or the like of the servo motor occurs, the servo motor can be stopped reliably and promptly, thereby being capable of contributing to provision of a drive device for an electric servo press, which is low in cost and excellent in operability and work efficiency.

Subsequently, a drive device (mechanism) 200 for an electric servo press machine according to a second example of this embodiment is described.

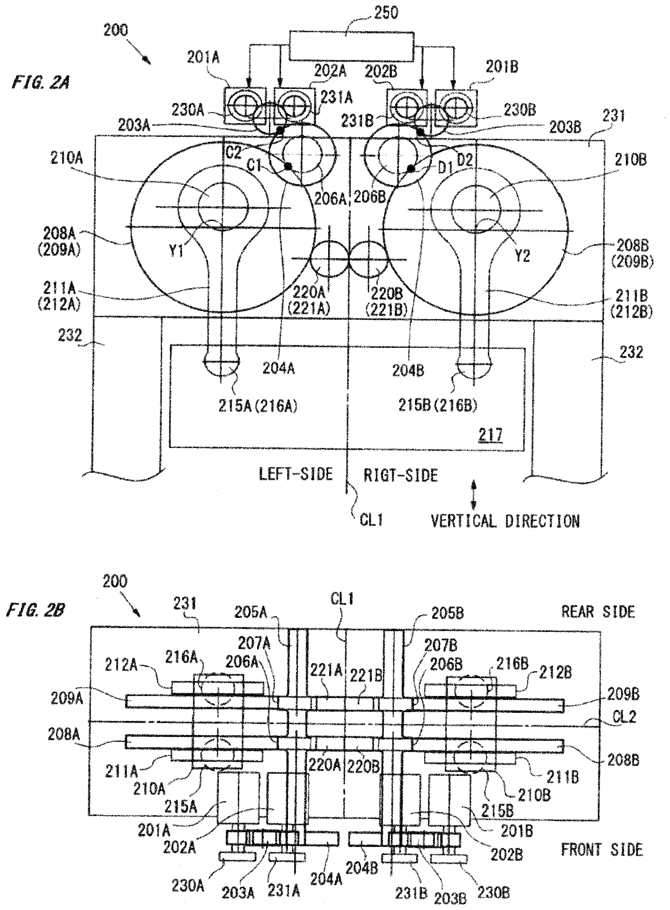

Fig. 2A is a front view of a drive device 200 for an electric servo press machine according to the second example, in which portions related to the present invention are extracted and other portions are omitted. Fig. 2B is a top view of portions related to the drive device of Fig. 2A.

Here, the left indicates a left side of a center line CL1 illustrated in Fig. 2A and Fig. 2B, and the right indicates a right side of the same center line CL1. Further, the front indicates a lower side of a center line CL2, which is illustrated in Fig. 2B, and the rear indicates an upper side of the same center line CL2 in Fig. 2B.

As illustrated in Fig. 2A and Fig. 2B, servo motors 201A and 202A being drive sources are configured to rotationally drive a common left drive gear 203A with which output gears of the servo motors 201A and 202A are meshed. The left drive gear 203A is meshed with a left intermediate gear 204A, and is configured to rotationally drive the left intermediate gear 204A. Similarly, on the right side, servo motors 201B and 202B being drive sources are configured to rotationally drive a common right drive gear 203B with which output gears of the servo motors 201B and 202B are meshed. The right drive gear 203B is meshed with a right intermediate gear 204B, and is configured to rotationally drive the right intermediate gear 204B. The drive of the servo motors 201A, 201B, 202A, and 202B is controlled based on a drive control signal from a control unit 250 being a controller.

The drive device 200 includes a frame 231 (crown of the press machine) extending in a left-and-right direction, and frames 232 (columns of the press machine) extending in a gravity direction, and each servo motor in the second example is mounted to the crown 231 in a fixed manner including components described later. Further, as each gear in the second example including gears described later, an outer peripheral gear is given as an example, and each gear is supported so as to be rotatable with respect to the crown 231 and the column 232 through intermediation of a bearing or the like.

Incidentally, the drive device (drive mechanism) 200 for an electric servo press machine according to this example basically has a structure with left-and-right symmetry and front-and-rear symmetry (front-and-back symmetry) except for a part which is asymmetric. Thus, components such as the gears and the shafts located at symmetrical positions can have at least the same specifications except for the asymmetric part.

The left intermediate gear 204A is provided coaxially and substantially integrally with a left drive shaft 205A, and a left-front main pinion gear 206A and a left-rear main pinion gear 207A are provided coaxially and substantially integrally with the left drive shaft 205A. Each drive shaft in the second example is supported so as to be rotatable with respect to the crown 231 and the column 232 through intermediation of a bearing or the like including a drive shaft described later.

A left-front main gear 208A is meshed with and rotationally connected (rotationally coupled) to the left-front main pinion gear 206A. Similarly, a left-rear main gear 209A is meshed with and rotationally connected (rotationally coupled) to the left-rear main pinion gear 207A.

Meanwhile, the right intermediate gear 204B is provided coaxially and substantially integrally with a right drive shaft 205B, and a right-front main gear 208B is meshed with and rotationally connected (rotationally coupled) to a right-front main pinion gear 206B provided to the right drive shaft 205B. Similarly, a right-rear main gear 209B is meshed with and rotationally connected (rotationally coupled) to a right-rear main pinion gear 207B.

A crankpin 210A offset (made eccentric) from a common rotation axis Y1 is provided substantially integrally with the left-front main gear 208A and the left-rear main gear 209A, and base end sides of a left-front connecting rod 211A and a left-rear connecting rod 212A are supported so as to be rotatable with respect to the crankpin 210A.

A front side and a rear side on a left side of a slide 217 are supported through intermediation of support portions 215A and 216A on distal end sides of the left-front connecting rod 211A and the left-rear connecting rod 212A.

Similarly, a crankpin 210B offset (made eccentric) from a common rotation axis Y2 is provided substantially integrally with the right-front main gear 208B and the right-rear main gear 209B, and base end sides of a right-front connecting rod 211B and a right-rear connecting rod 212B are supported so as to be rotatable with respect to the crankpin 210B.

A front side and a rear side on a right side of the slide 217 are supported through intermediation of support portions 215B and 216B on distal end sides of the right-front connecting rod 211B and the right-rear connecting rod 212B.

The slide 217 is supported so as to be vertically movable with respect to the crown 231 and the columns 232.

In such a configuration, when the servo motors 201A and 201B (202A and 202B) are rotationally driven based on a drive signal from the control unit 250, a rotation force is transmitted to the left drive gear 203A (right drive gear 203B), the left intermediate gear 204A (right intermediate gear 204B), the left-front main pinion gear 206A (right-front main pinion gear 206B), the left-rear main pinion gear 207A (right-front main pinion gear 207B), the left-front main gear 208A, and the left-rear main gear 209A (right-front main gear 208B and the right-rear main gear 209B) in the stated order, and the rotation force is converted into a vertical motion of the slide 217 via a crank mechanism (rotation-reciprocating linear motion conversion mechanism) including the left-front connecting rod 211A and the left-rear connecting rod 212A (right-front connecting rod 211B and right-rear connecting rod 212B) so that press working is performed by a die placed on a lower surface of the slide 217.

According to such a configuration in the second example, the number of the meshing points of the gears in the drive path (drive device) on the left-front side (left-rear side) from the left drive gear 203A to the left-front main gear 208A (left-rear main gear 209A) is two in total of C1 and C2.

Further, the number of the meshing points of the gears in the drive path (drive device) on the right-front side (right-rear side) from the right drive gear 203B to the right-front main gear 208B (right-rear main gear 209B) is two in total of D1 and D2.

Thus, according to such a configuration in the second example, the control unit 250 performs synchronization (tuning) control so as to eliminate rotation phase differences of the electric servo motors, thereby being capable of suppressing the phase differences in rotation of all the main gears 208A, 209A, 208B, and 209B on the right side, the left side, the front side, and the rear side of the drive device, and therefore, suppressing the phase differences of all motions (vertical motions) of the left-front connecting rod 211A, the left-rear connecting rod 212A, the right-front connecting rod 211B, and the right-rear connecting rod 212B.

Further, in the second example, the left drive shaft 205A and the right drive shaft 205B are independent, and are configured to be driven by the electric servo motors 201A and 202A and the electric servo motors 201B and 202B, respectively. Thus, on the left and right sides of the slide 217, that is, the "side on which the left-front connecting rod 211A and the left-rear connecting rod 212A are provided" and the "side on which the right-front connecting rod 211B and the right-rear connecting rod 212B are provided", a pressurizing force at capacity generating point positions (near a bottom dead center) can be made different.
That is, the press capacities in the left-and-right direction of the slide 217 can be made different. Thus, when a component asymmetrical in the left-and-right direction is to be pressed, or when a component including a plurality of dies provided in the left-and-right direction, which differ in required press capacity (components in which an eccentric load is generated at the time of pressing), is to be pressed, appropriate press capacities can be applied in the left-and-right direction, thereby being capable of producing a high-quality press-molded product.

Further, in the second example, as illustrated in Fig. 2A and Fig. 2B, two (a pair of) idle gears 220A (or 221A) and idle gears 220B (or 221B) can be interposed between the left-front main gear 208A (left-rear main gear 209A) and the right-front main gear 208B (right-rear main gear 209B).

The idle gears 220A and 221A are meshed with the left-front main gear 208A and the left-rear main gear 209A, respectively, and are meshed with the idle gears 220B and 221B, respectively.

The idle gears 220B and 221B are meshed with the right-front main gear 208B and the right-rear main gear 209B, respectively.

The idle gear 220A corresponds to the left-front idle gear in the present invention, the idle gear 221A corresponds to the left-rear idle gear in the present invention, the idle gear 220B corresponds to the right-front idle gear in the present invention, and the idle gear 221B corresponds to the right-rear idle gear in the present invention.

As described above, with the configuration in which the idle gear 220A (or 221A) and the idle gear 220B (or 221B) are interposed between the left-front main gear 208A (or the left-rear main gear 209A) and the right-front main gear 208B (or the right-rear main gear 209B), motions of the "left-front main gear 208A (or the left-rear main gear 209A)" and the "right-front main gear 208B (or the right-rear main gear 209B)" can be mechanically (structurally) synchronized (tuned) with each other. Therefore, motions of the "side on which the left-front connecting rod 211A and the left-rear connecting rod 212A are provided" and the "side on which the right-front connecting rod 211B and the right-rear connecting rod 212B are provided" can be mechanically (structurally) synchronized (tuned) with each other.

Thus, it is possible to contribute to reduction in cost and simplification of synchronization (tuning) control by software by the control unit 250.

Further, with this configuration in which the idle gear 220A (or 221A) and the idle gear 220B (or 221B) are interposed between left and right main gears, that is, the left-front main gear 208A (or the left-rear main gear 209A) and the right-front main gear 208B (or the right-rear main gear 209B), torque can be transmitted between the left and right main gears via those idle gears.

Hitherto, torque is transmitted from a main pinion gear to a main gear with one meshing point (torque transmission path) between the main pinion gear and the main gear. However, according to this configuration, torque can be transmitted to the main gear with two meshing points (torque transmission paths), that is, the "meshing point between the main pinion gear and the main gear" and the "meshing point between the idle gear and the main gear".

Thus, when required torque about the rotation axis of the main gear is equal to that of a configuration example in which an idle gear is not interposed, in this configuration, the transmission torque to the main gear can be dispersed to the two meshing points (torque transmission paths), thereby being capable of suppressing a load (transmission torque) acting on each meshing point (torque transmission path) to be low. Thus, according to this configuration, the strength of each gear can be made low, thereby being capable of contributing to reduction in size and weight of the drive device for a press machine.

Conversely, when the strengths of the gears are set equal to each other, according to this configuration, the transmission torque to the main gear can be dispersed to the two meshing points (torque transmission paths), thereby being capable of increasing the total transmission torque to the main gear. Accordingly, according to this configuration, it is possible to contribute to increase in the press capacity of the electric servo press machine.

Further, in this configuration, required torque can be compensated for between the left and right main gears, that is, the left-front main gear 208A (or the left-rear main gear 209A) and the right-front main gear 208B (or the right-rear main gear 209B). Thus, in the left and right main gears (or the con rods), and therefore, in the left-and-right direction of the slide, different capacity generating point positions (near a bottom dead center) are provided, and the transmission torque at the different capacity generating point positions (near the bottom dead center) can be distributed to the left and right within allowable torque (electric servo motor capacity) of the press machine as a whole.

Thus, when a component asymmetrical in the left-and-right direction is to be pressed, or a component including a plurality of dies provided in the left-and-right direction, which differ in required press capacity (component in which an eccentric load is generated at the time of pressing), is to be pressed, an appropriate press capacity can be distributed and applied in the left-and-right direction within the allowable torque (electric servo motor capacity) of the press machine as a whole, thereby being capable of producing a high-quality press-molded product.

As described above, according to the second example of this embodiment, it is possible to provide the drive device for an electric servo press machine, which is capable of suppressing the phase difference in the drive device, achieving fine press control, and therefore, producing a high-quality press product, in the electric servo press machine including the electric servo motors.

In the second example, brake devices 230A and 231A are arranged coaxially with the output rotation shafts of the servo motors 201A and 202A being the drive sources, and are configured to be capable of braking rotation of the servo motors 201A and 202A. Further, similarly, brake devices 230B and 231B are arranged coaxially with the output rotation shafts of the servo motors 201B and 202B, and are configured to be capable of braking rotation of the servo motors 201B and 202B. Those brake devices 230A, 231A, 230B, and 231B are configured to be capable of controlling drive (braking operation) thereof based on a control signal from the control unit 250. The brake devices 230A, 231A, 230B, and 231B can have the same configurations as those of the brake devices described in the first example.

Thus, similarly to those described in the first example, also in the second example, the brake devices 230A, 231A, 230B, and 231B being friction-type (mechanical-type) brake devices can be caused to function as parking brakes as well as emergency stop brakes.

In such a case, in view of achieving both avoidance of danger and suppressing friction of a friction element, the control unit 250 can perform such control that the friction element actually starts to come into contact with a mating member to start braking at an estimated stop time at which the electric servo motor is stopped in rotation in a normal case or around that time through execution of rotation stop control (for example, electromagnetic brake control).

That is, when a sudden stop command is issued, the control unit 250 performs control of switching the control of the electric servo motors 201A, 201B, 202A, and 202B to a predetermined motion (for example, a motion of stopping the electric servo motors 201A, 201B, 202A, and 202B at maximum acceleration within a range in which vibration and noise do not increase), and actively performing the rotation stop control for the motors to suppress a time to press stop to the minimum in a normal time. Further, when the minimum set time has elapsed regardless of whether the motor rotation is normal or abnormal or without making the decision, the control unit 250 performs control of canceling the rotation stop control to be switched to a motor rotation free state, and causing the brake devices 230A, 231A, 230B, and 231B to actually perform a brake operation (to actually perform braking) in this state.

According to such a configuration, the press machine can be suddenly stopped safely and reliably in a short period of time in response to a sudden stop command while avoiding a severe friction-type (mechanical-type) brake operation, and, even when runaway or the like of the servo motor occurs, the servo motor can be stopped reliably and promptly, thereby being capable of contributing to provision of a drive device for an electric servo press, which is low in cost and excellent in operability and work efficiency.

In each embodiment described above, each intermediate gear and each pinion gear are interposed between the output gear of each electric servo motor and each main gear. Thus, the speed reduction ratio between the output gear of each electric servo motor and each main gear can be changed relatively easily to various modes only through replacement to each intermediate gear and each pinion gear having different specifications. Accordingly, an optimal speed reduction ratio can be selected and set in accordance with various demands from a user, thereby being capable of providing a drive device for an electric servo press machine, which is user-friendly because of low cost and a high degree of freedom in setting.

According to the present invention, it is possible to provide a drive device for an electric servo press machine, which is capable of suppressing a phase difference in the drive device, achieving fine press control, and therefore, producing a high-quality press product, in the electric servo press machine including electric servo motors.

The embodiment described above is merely an example for describing the present invention, and the present invention is not limited thereto. Various modifications may be made without departing from the gist of the present invention.

## Claims

1. A drive device(1 00) for an electric servo press machine including at least a pair of left and right electric servo motors(101A,102A,101B,102B) as drive sources, the drive device comprising:
a left drive shaft(103A) rotationally driven directly or through intermediation of gears by an electric servo motor(101A,102A) on a left side of the pair of left and right electric servo motors;
a right drive shaft(103B) rotationally driven directly or through intermediation of gears by an electric servo motor(101B,102B) on a right side of the pair of left and right electric servo motors;
a left-front drive gear(104A) and a left-rear drive gear(108A), which have the same specifications, and are provided coaxially and integrally with the left drive shaft(103A);
a right-front drive gear(104B) and a right-rear drive gear(108B), which have the same specifications, and are provided coaxially and integrally with the right drive shaft(103B);
a left-front intermediate gear(105A) and a left-rear intermediate gear(109A), which have the same specifications, and are meshed with the left-front drive gear(104A) and the left-rear drive gear(108A), respectively;
a right-front intermediate gear(105B) and a right-rear intermediate gear(109B), which have the same specifications, and are meshed with the right-front drive gear(104B) and the right-rear drive gear(108B), respectively;
a left-front main pinion gear(106A) and a left-rear main pinion gear(110A), which have the same specifications, and are provided coaxially and integrally with the left-front intermediate gear(105A) and the left-rear intermediate gear(109A), respectively;
a right-front main pinion gear(106B) and a right-rear main pinion gear(110B), which have the same specifications, and are provided coaxially and integrally with the right-front intermediate gear(105B) and the right-rear intermediate gear(109B), respectively;
a left-front main gear(107A) and a left-rear main gear(111A), which have the same specifications, are meshed with the left-front main pinion gear(106A) and the left-rear main pinion gear(110A), respectively, and are provided coaxially with each other;
a right-front main gear(107B) and a right-rear main gear(111B), which have the same specifications, are meshed with the right-front main pinion gear(106B) and the right-rear main pinion gear(110B), respectively, and are provided coaxially with each other;
a left crankpin(112A) provided integrally with the left-front main gear(107A) and the left-rear main gear(111A) at a position offset in a predetermined manner from a common rotation center axis of the left-front main gear(107A) and the left-rear main gear(111A);
a right crankpin(112B) provided integrally with the right-front main gear(107B) and the right-rear main gear(111B) at a position offset in a predetermined manner from a common rotation center axis of the right-front main gear(107B) and the right-rear main gear(111B);
a left-front connecting rod(113A) and a left-rear connecting rod(114A) having base end sides supported so as to be rotatable with respect to the left crankpin(112A);
a right-front connecting rod(113B) and a right-rear connecting rod(114B) having base end sides supported so as to be rotatable with respect to the right crankpin(112B); and
a slide(117) supported on respective distal end sides(115A,116A,115B,116B) of the left-front connecting rod(113A), the left-rear connecting rod(114A), the right-front connecting rod(113B), and the right-rear connecting rod(114B) so as to be vertically movable.

2. A drive device(200) for an electric servo press machine including at least a pair of left and right electric servo motors(201A,202A,201B,202B) as drive sources, the drive device(200) comprising:
a left drive shaft(205A) rotationally driven through intermediation of gears by an electric servo motor(201A,202A) on a left side of the pair of left and right electric servo motors;
a right drive shaft(205B) rotationally driven through intermediation of gears by an electric servo motor(201B,202B) on a right side of the pair of left and right electric servo motors;
a left-front main pinion gear(206A) and a left-rear main pinion gear(207A), which have the same specifications, and are provided coaxially and integrally with the left drive shaft(205A);
a right-front main pinion gear(206B) and a right-rear main pinion gear(207B), which have the same specifications, and are provided coaxially and integrally with the right drive shaft(205B);
a left-front main gear(208A) and a left-rear main gear(209A), which have the same specifications, are meshed with the left-front main pinion gear(206A) and the left-rear main pinion gear(207A), respectively, and are provided coaxially with each other;
a right-front main gear(208B) and a right-rear main gear(209B), which have the same specifications, are meshed with the right-front main pinion gear(206B) and the right-rear main pinion gear(207B), respectively, and are provided coaxially with each other;
a left crankpin(210A) provided integrally with the left-front main gear(208A) and the left-rear main gear(209A) at a position offset in a predetermined manner from a common rotation center axis of the left-front main gear(208A) and the left-rear main gear(209A);
a right crankpin(210B) provided integrally with the right-front main gear(208B) and the right-rear main gear(209B) at a position offset in a predetermined manner from a common rotation center axis of the right-front main gear(208B) and the right-rear main gear(209B);
a left-front connecting rod(211A) and a left-rear connecting rod(212A) having base end sides supported so as to be rotatable with respect to the left crankpin(210A);
a right-front connecting rod(211B) and a right-rear connecting rod(212B) having base end sides supported so as to be rotatable with respect to the right crankpin(210B); and
a slide(217) supported on respective distal end sides(215A,216A,215B,216B) of the left-front connecting rod(211A), the left-rear connecting rod(212A), the right-front connecting rod(211B), and the right-rear connecting rod(212B) so as to be vertically movable.

3. The drive device(100,200) for an electric servo press machine according to claim 1 or 2, further comprising:
a left-front idle gear(120A,220A) meshed with the left-front main gear(107A,208A); and
a right-front idle gear(120B,220B) meshed with the left-front idle gear(120A,220A) and meshed with the right-front main gear(107B,208B).

4. The drive device(100,200) for an electric servo press machine according to claim 3, wherein press capacity generating point positions different from each other in a left-and-right direction of the slide(117,217) supported on a side on which the left-front connecting rod(113A,211A) and the left-rear connecting rod(114A.212A) are provided and a side on which the right-front connecting rod(113B,211B) and the right-rear connecting rod(114B,212B) are provided, and the drive device(100,200) is configured to control drive of each of the electric servo motors so as to distribute transmission torque at the different press capacity generating point positions in the left-and-right direction within capacities of the electric servo motors.

5. The drive device(100,200) for an electric servo press machine according to any one of claims 1 to 4, further comprising a friction-type brake device(118A,119A,118B,119B,230A,231A,230B,231B), which is configured to act on an output rotation shaft of the each of the electric servo motors(101A,102A,101B,102B,201A,202A,201B,202B) to apply a brake, and is caused to function as a parking brake and an emergency stop brake,
wherein, when the friction-type brake device is caused to function as the emergency stop brake, the controller(250) is configured to control the friction-type brake device such that a friction element actually starts to come into contact with a mating member to start braking at an estimated stop time at which the each of the electric servo motors is stopped in rotation in a normal case or around the estimated stop time through execution of rotation stop control.
